# EUROPEAN PATENT SPECIFICATION

(11) **EP 4 357 636 B1**
(45) Date of publication and mention of the grant of the patent: **10.06.2026**
(21) Application number: 21945870.0
(22) Date of filing: 14.06.2021
(51) Int. Cl.: F16F 9/14

(54) **ROTARY DAMPER**
ROTATIONSDÄMPFER
AMORTISSEUR ROTATIF

(43) Date of publication of application: 24.04.2024
(73) Proprietor: SOMIC MANAGEMENT HOLDINGS INC., Sumida-ku, Tokyo 130-0004 (JP)
(72) Inventor: TANAKA Katsumi, Hamamatsu-shi, Shizuoka 431-2103 (JP); OZAKI Keigo, Brewer, Maine 04412 (US)
(74) Representative: Wilson Gunn
(86) International application number: PCT/JP2021/022436
(87) International publication number: WO 2022/264190

(56) References cited:
- WO-A1-03/046405
- WO-A1-2012/141242
- CN-B- 103 527 700
- JP-A- 2008 144 779
- JP-A- 2019 082 208
- JP-A- H1 182 591
- JP-A- H11 336 822
- US-A1- 2017 130 795

## Description

### Technical Field

The present invention relates to a rotary damper.

### Background Art

Conventionally, there is known a rotary damper comprising a cylinder having a partition wall, and a rotor having a shaft part facing the partition wall, and whose cylinder is a casting. In the conventional rotary damper, the shaft part is designed in a straight shape, that is, a shape whose outer diameter is the same over a length direction of the shaft part, and the distal end of the partition wall is also designed in a straight shape, that is, a shape whose inner diameter is the same over the length direction of the partition wall. However, the conventional rotary damper has a problem that the cylinder is a casting, and therefore a recess due to external shrinkage is formed on the distal end surface of the partition wall. This recess expands a gap formed between the partition wall and the shaft part, and therefore becomes a factor that lowers characteristics of the rotary damper.

Furthermore, conventionally, there is known a method for producing a rotary damper comprising a step of casting a cylinder having a partition wall using a mold. However, the conventional production method has a problem that a portion of an upper mold of the mold that molds the distal end of the partition wall has a straight shape, that is, a shape whose outer diameter is the same over the length direction of the portion, external shrinkage occurs due to shrinkage at the time of solidification of a molten metal, and a recess is formed on the distal end surface of the partition wall.

WO 2003/046405 A1 discloses a rotary damper comprising a cylinder having a partition wall, a rotor having a shaft part facing the partition wall, a vane that protrudes from the shaft part, an oil passage that is formed in the vane, and a valve that changes a flow rate of oil passing through the oil passage in one direction according to a load. This rotary damper has characteristics that an operation time, that is, a time required for the rotor or the cylinder to rotate at a constant rotation angle hardly changes due to a change in load. However, there is a problem that, in a case where the cylinder is a casting and the partition wall includes a recess due to external shrinkage on the distal end surface of the partition wall, a sufficient amount of oil for the valve to function is not supplied to the valve, and therefore the characteristics lower.

WO 2012/141242 A1 discloses a rotary damper comprising a cylinder having a partition wall, a rotor having a shaft part facing the partition wall, a vane that protrudes from the shaft part, an oil passage that is formed in the vane, and a check valve that is provided to the oil passage. This rotary damper has characteristics that a braking force is generated only when the rotor is rotated in one direction. However, there is a problem that, in a case where the cylinder is a casting and the partition wall includes a recess due to external shrinkage on the distal end surface of the partition wall, oil flows out more than expected from a gap formed between the partition wall and the shaft part when the rotor is rotated in one direction, and therefore the braking force lowers.

CN103527700 B relates to a damper device for inserting a rotor into a fluid-tight damper chamber to apply a load to the rotor by the fluid during rotation of the rotor. US2017/130795 A1 relates to a fluid damper device in which fluid is filled between a case and a rotor and to an apparatus with a damper.

### Citation List

### Patent Literature

Patent Literature 1: WO 2003/046405 A1
Patent Literature 2: WO 2012/14242 A1
Patent Literature 3: CN103527700 B
Patent Literature 4: US2017/130795 A1

### Summary of Invention

### Technical Problem

An object of the present invention is to prevent expansion of a gap formed between partition wall and a shaft part.

### Solution to Problem

In order to solve the above problems, the present invention provides a rotary damper according to claim 1, and further embodiment of the invention is specified in dependent claim 2.

### Advantageous Effects of Invention

According to the present invention, the cylinder is a casting. However, the distal end of the partition wall has the tapered shape, so that it is possible to prevent a recess due to external shrinkage from being formed on the distal end surface of the partition wall. According to the present invention, the shaft part facing the partition wall also has the tapered shape, so that it is possible to prevent expansion of a gap formed between the partition wall and the shaft part. According to the present invention, it is possible to prevent expansion of the gap formed between the partition wall and the shaft part as described above, so that it is possible to supply to the valve a sufficient amount of oil for the valve to function. Consequently, according to the present invention, it is possible to reduce a range of a change in an operation time caused by a change in the load. According to the further embodiment of the present invention, it is possible to prevent expansion of the gap formed between the partition wall and the shaft part as described above, so that it is possible to prevent a decrease in a braking force caused when the rotor is rotated in one direction. On the other hand, when the rotor is rotated in an opposite direction, the oil hardly passes through the gap formed between the partition wall and the shaft part. However, according to the further embodiment of the present invention, the oil can pass through the two oil passages, that is, the first oil passage and the second oil passage when the rotor rotates in the opposite direction, so that it is possible to reduce the resistance of the oil that acts on the rotor. According to the further embodiment of the present disclosure, the upper mold of the mold used in the step of casting the cylinder including the partition wall includes the tapered part that molds the distal end of the partition wall into the tapered shape, and the dent that is formed in the surface of the tapered part, so that, by injecting a molten metal into the dent, it is possible to prevent occurrence of external shrinkage on the distal end surface of the partition wall, and prevent a recess due to external shrinkage from being formed on the distal end surface of the partition wall. Consequently, it is possible to prevent expansion of the gap formed between the partition wall and the shaft part.

### Brief Description of Drawings

Fig. 1 is a plan view of a rotary damper according to an embodiment.
Fig. 2 is a cross-sectional view taken along a portion A-A in Fig. 1.
Fig. 3 is a cross-sectional view taken along a portion B-B in Fig. 1.
Fig. 4 is a cross-sectional view taken along a portion C-C in Fig. 2.
Fig. 5 is a plan view of a cylinder adopted in the embodiment.
Fig. 6 is a perspective view of a rotor adopted in the embodiment.
Fig. 7 is a front view of a rotor adopted in the embodiment.
Fig. 8 is a perspective view of a valve body of a valve adopted in the embodiment.
Fig. 9 is a cross-sectional view illustrating an initial state of a valve adopted in the embodiment.
Fig. 10 is a cross-sectional view for describing an operation of the valve adopted in the embodiment.
Fig. 11 is a cross-sectional view for describing the operation of the valve adopted in the embodiment.
Fig. 12 is a cross-sectional view for describing the operation of the valve adopted in the embodiment.
Fig. 13 is a cross-sectional view of a check valve adopted in the embodiment.
Fig. 14 is a perspective view of a valve body of the check valve adopted in the embodiment.
Fig. 15 is a cross-sectional view for describing an operation of the check valve adopted in the embodiment.
Fig. 16 is a schematic partial cross-sectional view of an upper mold used by the production method according to the present invention.
Fig. 17 is a schematic partial cross-sectional view of an upper mold used by a conventional technique.
Fig. 18 is a graph illustrating a relationship between an operation time and a load.

### Description of Embodiments

Hereinafter, an embodiment of the present invention will be described with reference to the drawings.

### Embodiment

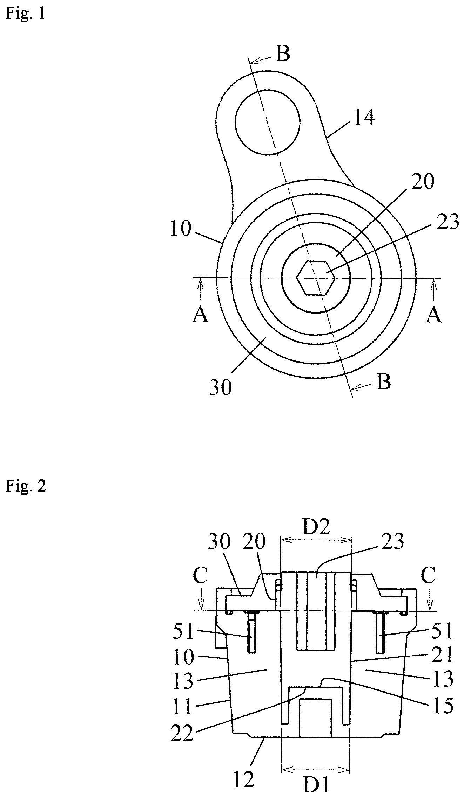

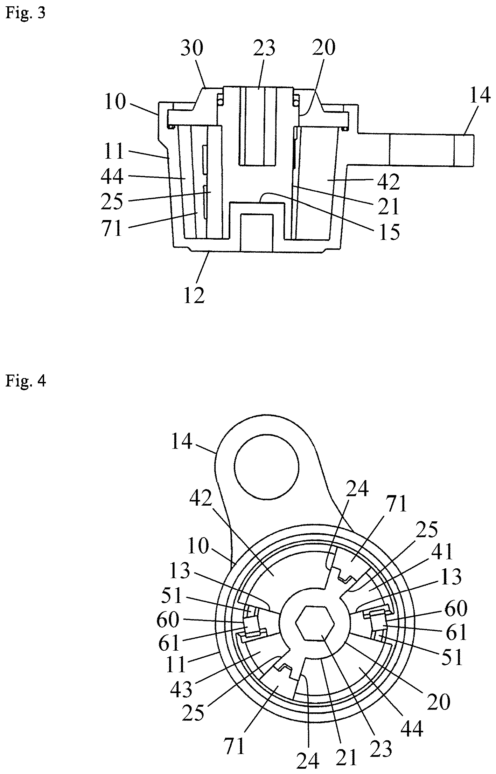

As illustrated in Fig. 1, a rotary damper according to the embodiment comprises a cylinder 10 and a rotor 20. The cylinder 10 is a cylindrical part that contains oil inside. The rotor 20 is a part that rotates. In this regard, the rotor 20 may not rotate depending on cases. A braking action in a case where the cylinder 10 is fixed so as not to rotate and the rotor 20 is rotated in one direction, that is, the clockwise direction in Figs. 1 and 4, and a braking action in a case where the rotor 20 is fixed so as not to rotate and the cylinder 10 is rotated in an opposite direction, that is, the counterclockwise direction in Figs. 1 and 4 are the same.

The cylinder 10 adopted in the embodiment is a casting. As illustrated in Figs. 2, 3, 4, and 5, the cylinder 10 includes a peripheral wall 11, an end wall 12 that closes one end of the peripheral wall 11, and partition walls 13 that protrude from the peripheral wall 11 toward the center. As illustrated in Figs. 1, 3, 4, and 5, the cylinder 10 includes a flange 14 that protrudes from the peripheral wall 11. The flange 14 is coupled to an object that fixes the cylinder 10 so as not to rotate or an object that rotates the cylinder 10. As illustrated in Figs. 1, 2, and 3, the other end of the peripheral wall 11 is closed by a lid 30. The lid 30 is attached to the cylinder 10 by caulking an end part of the peripheral wall 11. As illustrated in Figs. 2, 3, and 5, the cylinder 10 includes a protrusion part 15 that protrudes from the end wall 12. As illustrated in Fig. 2, the distal end of the partition wall 13 has a tapered shape. That is, an interval between the two partition walls 13 and 13 becomes smaller toward the one end such that an inner diameter D1 of the one end is smaller than an inner diameter D2 of the other end.

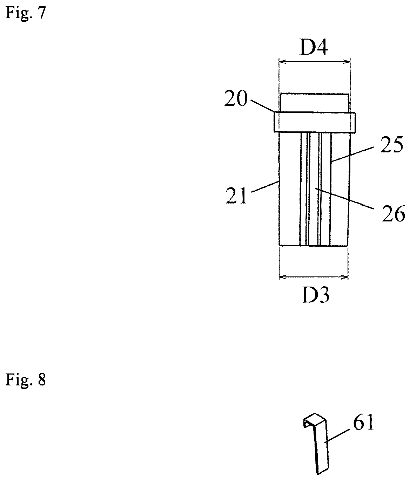

The rotor 20 adopted in the embodiment is a casting. In this regard, the rotor 20 may not be the casting. As illustrated in Figs. 2, 3, 4, 6, and 7, the rotor 20 includes a shaft part 21 that faces the partition walls 13. As illustrated in Fig. 7, the shaft part 21 has a tapered shape. That is, the outer diameter of the shaft part 21 becomes smaller toward the one end such that an outer diameter D3 of one end is smaller than an outer diameter D4 of the other end. A taper angle of the shaft part 21 is the same as a taper angle of the distal end of the partition wall 13.

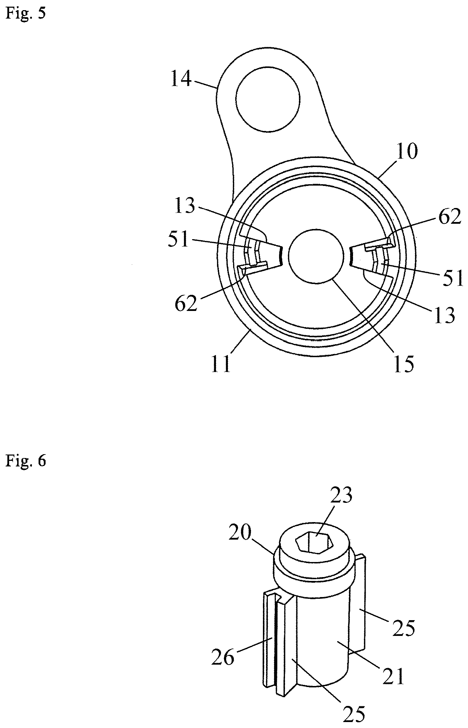

As illustrated in Figs. 1, 2, 3, and 4, the rotor 20 is installed such that the shaft part 21 can rotate in the cylinder 10. As illustrated in Fig. 2, at the one end of the rotor 20, a recessed part 22 that fits to the protrusion part 15 formed in the cylinder 10 is formed. As illustrated in Figs. 1, 2, 3, 4, and 6, at the other end of the rotor 20, a hole 23 is formed into which an object that rotates the rotor 20 or an object that fixes the rotor 20 so as not to rotate is inserted. As illustrated in Fig. 4, the rotor 20 includes vanes 24 that protrude from the shaft part 21. The vane 24 includes a valve body 71 and a holding part 25 that holds the valve body 71. As illustrated in Figs. 6 and 7, at the distal end of the holding part 25 integrally molded with the shaft part 21, a groove 26 is formed.

As illustrated in Fig. 4, four oil chambers partitioned by the partition walls 13 and the vanes 24, that is, a first oil chamber 41, a second oil chamber 42, a third oil chamber 43, and a fourth oil chamber 44 are formed in the cylinder 10. Oil is injected into each of the oil chambers 41 to 44.

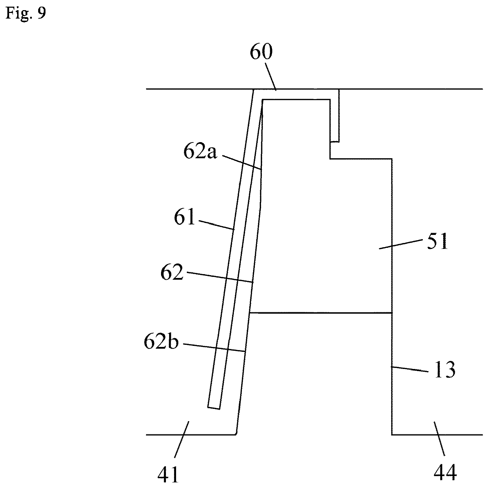

As illustrated in Figs. 2, 4, and 5, a first oil passage 51 is formed in the partition wall 13. The first oil passage may be formed in the vane. As illustrated in Fig. 4, the first oil passage 51 is provided with a valve 60. As illustrated in Fig. 9, the valve 60 includes a valve body 61 and a valve seat 62. As illustrated in Figs. 8 and 9, the valve body 61 is a leaf spring. As illustrated in Fig. 9, the valve seat 62 includes two inclined surfaces 62a and 62b formed on the partition wall 13. This valve 60 increases distortion of the valve body 61 by making an inclination angle of the one slope 62a different from an inclination angle of the other slope 62b.

This valve 60 has a function of changing a flow rate of oil passing through the first oil passage 51 in the one direction according to a load. The "oil passing through the first oil passage 51 in the one direction" means oil that moves from the first oil chamber 41 to the fourth oil chamber 44 via the first oil passage 51, and oil that moves from the third oil chamber 43 to the second oil chamber 42 via the first oil passage 51. The "flow rate of the oil" means the amount of oil passing through the first oil passage 51 within a unit time. The "load" means a force that rotates the rotor 20 in the one direction, that is, the clockwise direction in Figs. 1 and 4, or a force that rotates the cylinder 10 in the opposite direction, that is, the counterclockwise direction in Figs. 1 and 4. The "change" means that the flow rate of the oil is reduced as the load increases.

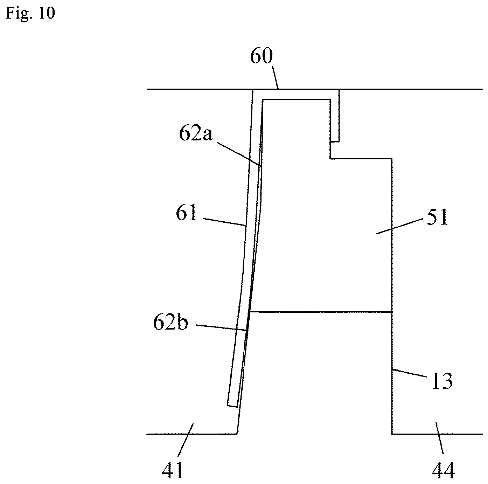

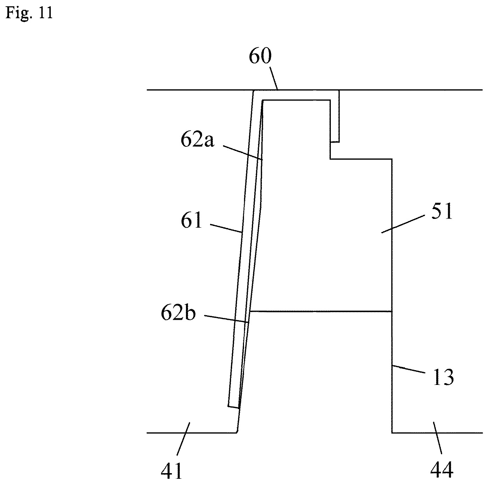

The pressure of the oil acting on the valve body 61 increases as the load increases. However, the restoring force of the valve body 61 becomes a resistance against the oil pressure. Hence, according to the valve 60, when the load is high, as illustrated in Fig. 10, the valve body 61 does not close the first oil passage 51, and the valve body 61 is greatly deformed to reduce an opening degree of the valve 60. On the other hand, when the load is low, as illustrated in Fig. 11, since the deformation amount of the valve body 61 decreases, the opening degree of the valve 60 increases. As a result, this valve 60 can substantially fix an operation time, that is, a time required for the rotor 20 to rotate in the one direction at a constant rotation angle or a time for the cylinder 10 to rotate in the opposite direction at a constant rotation angle even when the load changes.

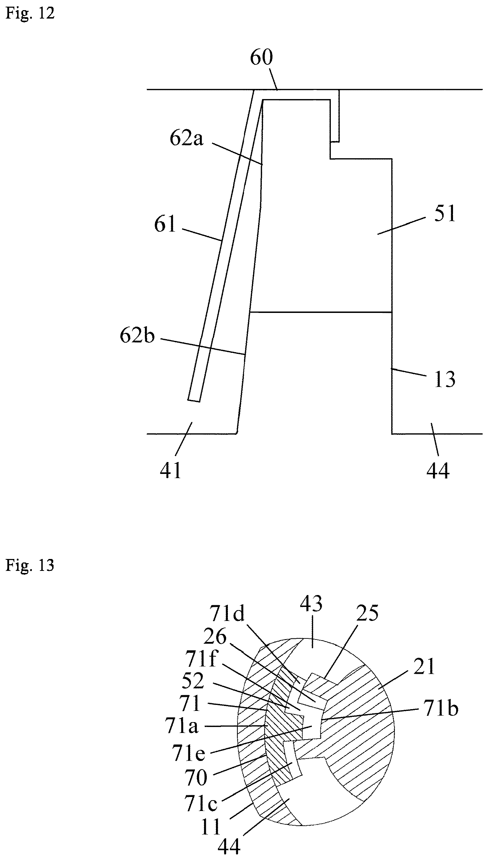

When the oil moves from the fourth oil chamber 44 to the first oil chamber 41 via the first oil passage 51, and when the oil moves from the second oil chamber 42 to the third oil chamber 43 via the first oil passage 51, as illustrated in Fig. 12, the valve body 61 is greatly deformed by the oil pressure, and the opening degree of the valve 60 becomes larger than that in the initial state illustrated in Fig. 9. Consequently, this valve 60 can reduce the resistance of the oil acting on the rotor 20 that rotates in the opposite direction or the cylinder 10 that rotates in one direction.

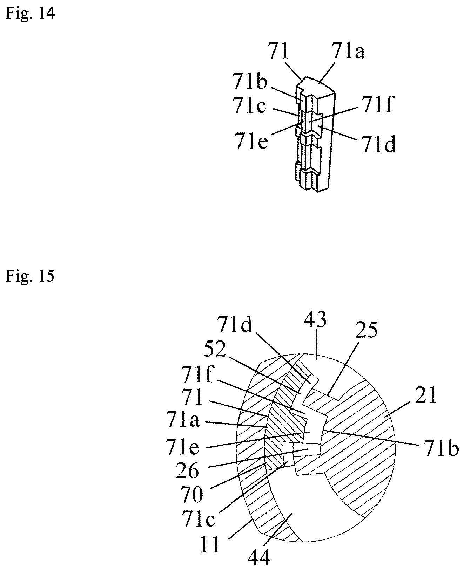

As illustrated in Figs. 13 and 15, a second oil passage 52 is formed in the vane 24. The second oil passage is formed in the partition wall or the vane in which the first oil passage is not formed. The second oil passage 52 includes a combination of grooves 71c to 71f formed in a valve body 71, and the groove 26 formed in the holding part 25. As illustrated in Figs. 13 and 15, the second oil passage 52 is provided with a check valve 70. The check valve 70 includes the valve body 71. As illustrated in Fig. 14, the valve body 71 includes an arc-shaped main body part 71a and a protrusion part 71b protruding from the main body part 71a. The main body part 71a includes the two grooves 71c and 71d formed on the inner surface, and the protrusion part 71b includes the groove 71e formed at the distal end, and the groove 71f formed on the one side surface. As illustrated in Figs. 13 and 15, the main body part 71a is disposed between the peripheral wall 11 and the holding part 25. The protrusion part 71b is disposed in the groove 26 formed in the holding part 25. Since there is play between the groove 26 and the protrusion part 71b, the valve body 71 can move in a circumferential direction. The main body part 71a of the valve body 71 preferably has elasticity. This is because a gap formed between the peripheral wall 11 and the valve body 71 can be sealed by the elasticity of the main body part 71a.

According to this check valve 70, when the rotor 20 rotates in the one direction, that is, the clockwise direction in Figs. 1 and 4, or when the cylinder 10 rotates in the opposite direction, that is, the counterclockwise direction in Figs. 1 and 4, as illustrated in Fig. 13, the protrusion part 71b of the valve body 71 comes into contact with the one side surface of the groove 26 of the holding part 25 to close the second oil passage 52, and when the rotor 20 rotates in the opposite direction, that is, the counterclockwise direction in Figs. 1 and 4, or when the cylinder 10 rotates in the one direction, that is, the clockwise direction in Figs. 1 and 4, as illustrated in Fig. 15, the protrusion part 71b of the valve body 71 comes into contact with the other side surface of the groove 26 of the holding part 25 to open the second oil passage 52. The rotary damper according to the embodiment can prevent expansion of gaps formed between the partition walls 13 and the shaft part 21, so that the oil hardly passes through the gaps. However, the oil can pass through the two oil passages, that is, the first oil passages 51 and the second oil passages 52, so that, when the rotor 20 rotates in the opposite direction or the cylinder 10 rotates in the one direction, it is possible to reduce the resistance of the oil acting on the rotor 20 or the cylinder 10.

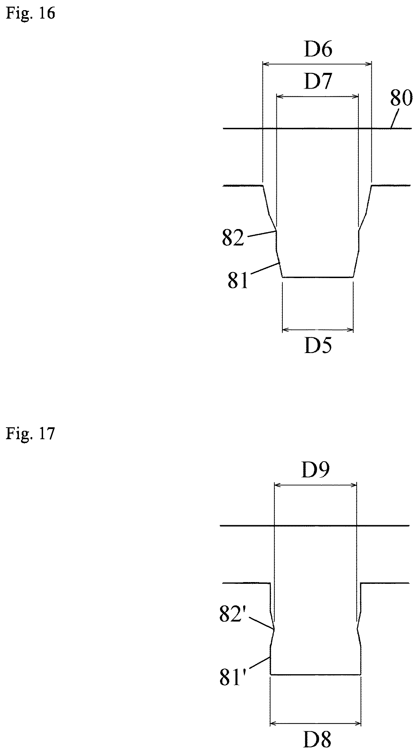

The method for producing the rotary damper according to the embodiment includes a process of casting a cylinder having partition walls using a mold. The mold used in this process is a combination of an upper mold and a lower mold. As illustrated in Fig. 16, an upper mold 80 includes a tapered part 81 that molds the distal end of the partition wall into a tapered shape, and a dent 82 that is formed on the surface of the tapered part 81.

As illustrated in Fig. 16, the tapered part 81 has a tapered shape. That is, the outer diameter of the tapered part 81 becomes smaller toward the one end such that an outer diameter D5 of the one end is smaller than an outer diameter D6 of the other end. This upper mold 80 includes the dent 82 on the surface of the tapered part 81, so that, by injecting a molten metal into the dent 82, it is possible to prevent occurrence of external shrinkage on the distal end surfaces of the partition walls, and prevent recesses due to external shrinkage from being formed on the distal end surfaces of the partition walls.

In the process of casting the cylinder, part of the distal end of the partition wall protrudes into the dent 82 when shrinkage accompanying solidification of the molten metal does not occur as designed. However, even when such a situation occurs, as illustrated in Fig. 16, a diameter D7 of the dent 82 is larger than the outer diameter D5 of the one end of the tapered part 81, so that it is possible to release the mold.

According to the conventional technique, a portion of an upper mold (hereinafter, referred to as a "molding portion") that molds the distal ends of partition walls has a straight shape, that is, a shape whose outer diameter is the same over a length direction of the molding portions, external shrinkage occurs due to shrinkage at the time of solidification of a molten metal, and recesses due to external shrinkage have been formed on the distal end surfaces of the partition walls. In order to solve this problem, it is conceivable to form a dent on the surface of a molding portion. However, according to the conventional technique, as illustrated in Fig. 17, a diameter D9 of a dent 82' is smaller than an outer diameter D8 of one end of a molding portion 81', and therefore when part of the distal end of the partition wall protrudes into the dent 82', it is impossible to release the mold. Therefore, the conventional technique cannot form the dent 82' in the surface of the molding portion 81'.

In the rotary damper according to the embodiment, although the cylinder 10 is the casting, the distal end of the partition wall 13 has the tapered shape, so that it is possible to prevent recesses due to external shrinkage from being formed on the distal end surfaces of the partition walls 13. Furthermore, the shaft part 21 facing the partition walls 13 also has the tapered shape, so that it is possible to prevent expansion of the gaps formed between the partition walls 13 and the shaft part 21, and consequently it is possible to improve the characteristics of the rotary damper compared to the conventional technique.

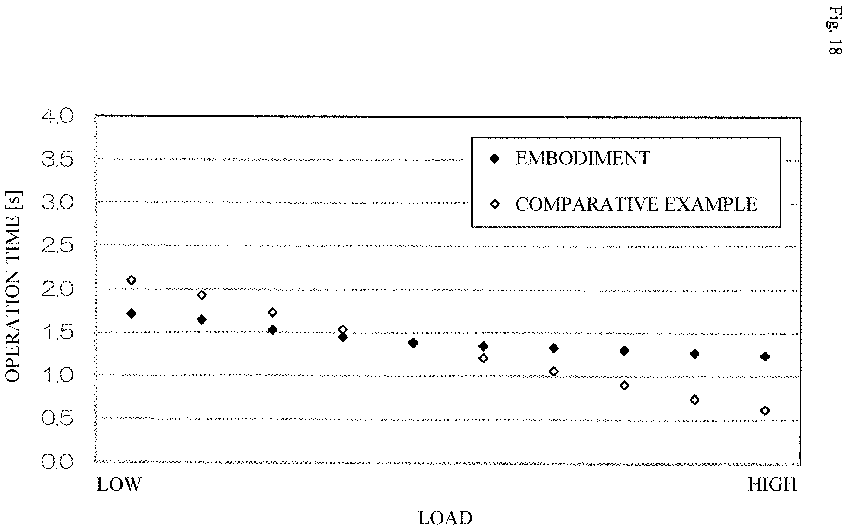

Fig. 18 is a graph illustrating a relationship between an operation time and a load. The difference between the embodiment and the comparative example is the shapes of the shaft part and the distal end of the partition wall. In the comparative example, the shapes of the shaft part and the distal end of the partition wall are straight shapes.

As illustrated in this graph, the range of change in the operation time caused by the change in the load in the embodiment is less than that in the comparative example. This experiment shows that, while a difference between a maximum value and a minimum value of the operation time in the comparative example was about 1.5 seconds, the difference in the embodiment was approximately 0.5 seconds that was approximately 1/3 of that of the comparative example. This result indicates that more oil could be supplied to the valves in the embodiment than in the comparative example, and demonstrates that the embodiment can prevent expansion of the gaps formed between the partition walls and the shaft part.

### Reference Signs List

- 10: CYLINDER
- 11: PERIPHERAL WALL
- 12: END WALL
- 13: PARTITION WALL
- 14: FLANGE
- 15: PROTRUSION PART
- 20: ROTOR
- 21: SHAFT PART
- 22: RECESSED PART
- 23: HOLE
- 24: VANE
- 25: HOLDING PART
- 26: GROOVE
- 30: LID
- 41: FIRST OIL CHAMBER
- 42: SECOND OIL CHAMBER
- 43: THIRD OIL CHAMBER
- 44: FOURTH OIL CHAMBER
- 51: FIRST OIL PASSAGE
- 52: SECOND OIL PASSAGE
- 60: VALVE
- 61: VALVE BODY
- 62: VALVE SEAT
- 70: CHECK VALVE
- 71: VALVE BODY
- 80: UPPER MOLD
- 81: TAPERED PART
- 82: DENT

## Claims

1. A rotary damper comprising a cylinder (10) having a partition wall (13), a rotor (20) having a shaft part (21) facing the partition wall (13), a vane (24) that protrudes from the shaft part (21), a first oil passage (51) that is formed in the partition wall (13) or the vane (24), and a valve (60),
wherein the cylinder (10) is a casting, wherein a distal end of the partition wall (13) and the shaft part (21) have a tapered shape, wherein when the rotor (20) rotates in one direction or the cylinder (10) rotates in the opposite direction, the valve (60) changes a flow rate of oil passing through the first oil passage (51) according to a load, wherein the valve (60) reduces the flow rate of the oil as the load increases, and wherein when the rotor (20) rotates in the opposite direction or the cylinder (10) rotates in one direction, the valve (60) can reduce a resistance of the oil acting on the rotor (20) that rotates in the opposite direction or the cylinder (10) that rotates in one direction.

2. The rotary damper according to claim 1 further comprising a second oil passage (52) that is formed in the partition wall (13) or the vane (24) in which the first oil passage (51) is not formed, and a check valve (70) that is provided to the second oil passage (52).

## Patentansprüche

1. Rotationsdämpfer, umfassend einen Zylinder (10) mit einer Trennwand (13), einen Rotor (20) mit einem Wellenteil (21), der der Trennwand (13) zugewandt ist, eine Schaufel (24), die von dem Wellenteil (21) vorsteht, einen ersten Öldurchgang (51), der in der Trennwand (13) oder der Schaufel (24) gebildet ist, und ein Ventil (60), wobei der Zylinder (10) ein Gussteil ist, wobei ein distales Ende der Trennwand (13) und des Wellenteils (21) eine sich verjüngende Form haben, wobei dann, wenn der Rotor (20) in einer Richtung rotiert oder der Zylinder (10) in der entgegengesetzten Richtung rotiert, das Ventil (60) eine Fließrate von Öl, das durch den ersten Öldurchgang (51) hindurchtritt, entsprechend einer Last verändert, wobei das Ventil (60) die Fließrate des Öls verringert, wenn die Last zunimmt, und wobei dann, wenn der Rotor (20) in der entgegengesetzten Richtung rotiert oder der Zylinder (10) in einer Richtung rotiert, das Ventil (60) einen Widerstand des Öls verringern kann, das auf den Rotor (20) wirkt, der in der entgegengesetzten Richtung rotiert, oder den Zylinder (10), der in einer Richtung rotiert.

2. Rotationsdämpfer nach Anspruch 1, ferner umfassend einen zweiten Öldurchgang (52), der in der Trennwand (13) oder der Schaufel (24) gebildet ist, worin der erste Öldurchgang (51) nicht gebildet ist, und ein Sperrventil (70), das bei dem zweiten Öldurchgang (52) vorgesehen ist.

## Revendications

1. Un amortisseur rotatif comprenant un cylindre (10) ayant une cloison (13), un rotor (20) ayant une partie (21) d'arbre faisant face à la cloison (13), une aube (24), qui fait saillie de la partie (21) d'arbre, un premier passage (51) d'huile, qui est formé dans la cloison (13) ou dans l'aube (24), et une soupape (60),
dans lequel le cylindre (10) est une pièce coulée, dans lequel une extrémité distale de la cloison (13) et de la partie (21) d'arbre ont une forme conique, dans lequel, lorsque le rotor (20) tourne dans un sens ou lorsque le cylindre (10) tourne dans le sens contraire, la soupape (60) change un débit d'huile passant dans le premier passage (51) d'huile suivant une charge, dans lequel la soupape (60) réduit le débit d'huile au fur et à mesure que la charge augmente, et dans lequel, lorsque le rotor (20) tourne dans le sens contraire ou lorsque le cylindre (10) tourne dans le un sens, la soupape (60) peut réduire une résistance de l'huile agissant sur le rotor (20), qui tourne dans le sens contraire ou du cylindre (10) dans le un sens.

2. L'amortisseur rotatif suivant la revendication 1, comprenant un outre un deuxième passage (52) d'huile, qui est formé dans la cloison (13) ou l'aube (24), dans laquelle le premier passage (51) d'huile n'est pas formé, et un clapet (70) de non-retour, qui est monté sur le deuxième passage (52) d'huile.
